(19) **Europäisches Patentamt / European Patent Office / Office européen des brevets**

(11) **EP 3 993 685 B1**

(12) **EUROPEAN PATENT SPECIFICATION**

(45) Date of publication and mention
of the grant of the patent:
**03.09.2025 Bulletin 2025/36**

(21) Application number: **20837141.9**

(22) Date of filing: **03.07.2020**

(51) International Patent Classification (IPC):
*A47L 9/28* (2006.01)    *B25J 19/02* (2006.01)
*B25J 9/00* (2006.01)    *B25J 9/16* (2006.01)
*B25J 13/08* (2006.01)    *G01L 1/14* (2006.01)
*G01L 5/00* (2006.01)    *A47L 9/00* (2006.01)
*G01C 21/20* (2006.01)

(52) Cooperative Patent Classification (CPC):
**A47L 9/009; G01C 21/206;** A47L 2201/022;
A47L 2201/04

(86) International application number:
**PCT/KR2020/008702**

(87) International publication number:
**WO 2021/006550 (14.01.2021 Gazette 2021/02)**

(54) **ROBOT CLEANER USING ARTIFICIAL INTELLIGENCE AND CONTROLLING METHOD THEREOF**

REINIGUNGSROBOTER MIT KÜNSTLICHER INTELLIGENZ UND STEUERUNGSVERFAHREN DAFÜR

ROBOT NETTOYEUR FAISANT APPEL À L'INTELLIGENCE ARTIFICIELLE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2019  KR 20190081469**

(43) Date of publication of application:
**11.05.2022  Bulletin 2022/19**

(73) Proprietor: **LG Electronics Inc.**
**SEOUL 07336 (KR)**

(72) Inventor: **AHN, Eungjin**
**Seoul 08592 (KR)**

(74) Representative: **Ter Meer Steinmeister & Partner**
**Patentanwälte mbB**
**Nymphenburger Straße 4**
**80335 München (DE)**

(56) References cited:
WO-A1-2019/027140    WO-A1-2019/056124
JP-A- 2000 326 808    JP-B2- 5 720 920
KR-A- 20120 011 145    KR-B1- 101 130 729
KR-B1- 101 130 729    KR-B1- 101 220 848
KR-B1- 101 349 208

EP 3 993 685 B1

## Description

## Technical Field

The present disclosure relates to a robot cleaner and a method for controlling the robot cleaner, and more particularly, to a method of detecting a robot cleaner using artificial intelligence and a corresponding controlling technology.

## Background Art

Robots have been developed for industrial use and have been a part of factory automation.

In recent years, the application of robots has been further expanded, medical robots, aerospace robots, and the like have been developed, and home robots that can be used in general homes have also been manufactured. Among these robots, a robot capable of traveling by itself is called a moving robot. A representative example of a moving robot used in home is a robot cleaner.

Various technologies for detecting an environment and a user around the robot cleaner through various sensors provided in the robot cleaner are known. In addition, technologies which allow the robot cleaner to learn and map a traveling area by itself and to determine a current position on a map are known. A robot cleaner that travels and cleans a traveling area in a preset manner is known.

In addition, in the prior art (Korean Patent Publication No. 10-2010-0000455), a technique of performing a pattern driving in a zigzag manner along a wall surface running on the outside of the area while driving the area to be cleaned by itself is disclosed.

On the other hand, in the use of such a robot cleaner, various sensors are disclosed for determining whether there is an obstacle in the front by being applied as a distance sensing unit.

In this regard, in the prior art (Korean Registered Patent No. 10-2010-0105097), when the body and the bumper of the robot cleaner are directly coupled, a resistive film and a metal film are formed therebetween, and a robot cleaner is disclosed that can determine whether there is an obstacle by contact. That is, when an obstacle comes into contact with the bumper, a metal film is formed so that the shape is deformed together with the bumper to contact the resistance film so that the resistance value is measured.

However, this prior art is a bumper structure using a resistive film, and a resistance value error may occur when the film is damaged due to collision accumulation, and as a limitation of the resistive film structure when colliding with two obstacles at the same time, it detects a completely different direction of collision.

On the other hand, prior art (US Patent Registration No. US8489234) discloses a sensor that measures a distance or detects whether there is an obstacle by a combination of a transmitter and a receiver using an ultrasonic sensor. However, such a prior art requires a plurality of sensor units while alternately arranging the transmitting sensor and the receiving sensor, and thus increases the material cost according to the cost of the ultrasonic sensor and requires precision of the placement angle.

[Prior Art Document]

[Patent Document]

(Patent Document 1) Korean Registered Patent No. 10-2010-0105097 (published date: May 07, 2012)
(Patent Document 2) US Registered Patent No. US8489234 (published date: November 11, 2011)

WO 2019/027140 A1 relates to a cleaning robot and a control method therefor, and to a cleaning robot for changing a moving path by detecting an obstacle through a change in the dielectric constant detected while traveling in a cleaning space, and a control method therefor. The cleaning robot comprises: a main body; a traveling unit for moving the main body; an obstacle detection unit including an electrode plate provided on the lower surface of the main body and a touch IC for detecting a change in the capacitance detected by the electrode plate; and a control unit for determining an obstacle on the basis of a signal transmitted by the obstacle detection unit, and controlling the traveling unit.

KR 101 130 729 B1 relates to a collision detection device that detects the location of a collision by detecting a change in voltage generated when a collision occurs, and a cleaning robot using the same. For this purpose, is provided a strip-shaped ground thin film; a plurality of contact thin films spaced a certain distance away from the ground thin film, maintaining a certain distance from each other, and installed opposite the ground thin film; Resistors connected between the contact thin films installed at regular intervals; and a control unit that detects a voltage change that occurs due to a short circuit between any one of the plurality of contact thin films and the ground thin film.

KR 2012 0011145 A presents an apparatus for detecting contact and cleaning robot using the same. A contact sensing device comprises an upper switch unit, a power line unit, and a lower switch unit. The upper switch unit forms an upper contact point on the top and forms a lower contact point on the bottom. When the top contact point is contacted with an object, the upper switch unit is deformed and presses the lower contact point. The power line unit is installed on the lower contact point of the upper switch unit. The power source for the contact detection is applied on the power line unit. The lower switch unit is installed on the lower part of the upper switch unit.

## Disclosure of Invention

## Technical Problem

A first object is to provide a collision detection unit capable of realizing obstacle detection of a robot cleaner using a low-cost collision sensor (A).

A second object is to provide the collision detection unit capable of minimizing the impact of collision on the inside of the body by providing a bumper structure to the collision detection unit of the robot cleaner.

A third object is to provide the collision detection unit without deteriorating detection performance due to collision accumulation because two membranes for collision detection do not directly contact by detecting the capacitance of the collision sensor of the robot cleaner

A fourth object is to provide the collision detection unit capable of determining a collision position and a collision strength by detecting the electrostatic capacity of the collision sensor (A) in the collision detection unit of the robot cleaner.

A fifth object is to provide a collision detection unit capable of reducing costs by grouping a plurality of collision sensors (A) of the collision detection unit of the robot cleaner and selectively detecting a specific group at a specific time.

## Solution to Problem

One or more objects of the present technique are achieved by the invention set out by the features of the independent claim(s).

In an aspect, there is provided Robot cleaner including: a traveling unit configured to move a main body; a cleaning unit configured to perform a cleaning function; a collision detection unit configured to be disposed on the side of the main body and detect collision due to variable capacitance due to the collision with an external environment; and a controller configured to determine whether the collision occurs according to a detection signal from the collision detection unit and control the traveling unit.

The collision detection unit comprises a plurality of variable capacitance collision sensors spaced apart along the side of the main body.

Each of the variable capacitance collision sensors comprises; a transmitting electrode receiving a transmission signal, a counter electrode facing the transmitting electrode, a receiving electrode facing the counter electrode and outputting the detection signal, and a dielectric layer formed between the transmitting electrode, the counter electrode, and the receiving electrode.

The transmitting electrode and the receiving electrode are formed on a same printed circuit board.

The counter electrode faces the transmitting electrode and the receiving electrode simultaneously with the dielectric layer interposed therebetween, and a distance between the counter electrode and the transmitting electrode and the receiving electrode is variable due to the collision so that capacitance is variable.

A plurality of elastic portion is formed in the dielectric layer between the counter electrode, the transmitting electrode, and the receiving electrode.

The robot cleaner further comprises a buffer portion surrounding the side of the main body to absorb impact.

The buffer portion comprises a plurality of protrusions spaced apart by a predetermined distance and projecting toward the front.

The counter electrode is formed on lower portion of the protrusions of the buffer portion.

The counter electrode is formed to correspond to each protrusion of the buffer portion.

The dielectric layer is filled with air.

The controller is implemented with a chip comprising; an output terminal for supplying the transmission signal to the plurality of the transmitting electrodes simultaneously; and a plurality of input terminals respectively connected to the respective receiving electrodes and for acquiring a voltage of the connected receiving electrode as the detection signal.

The controller defines the receiving electrode having the detection signal is below a threshold value and calculates collision strength and collision direction by calculating change amount of the detection signal.

The plurality of the variable capacity collision sensors are grouped into a plurality of groups, the transmission signals are sequentially scanned to the plurality of groups, and the detection signal is read from the receiving electrode of the variable capacity collision sensor of each group.

In another aspect, there is provided a method of controlling a robot cleaner to perform cleaning while moving a main body, the method comprising: periodically transmitting a transmission signal to a collision detection unit arranged on the side of the main body, and detecting a collision due to variable capacitance due to the collision with an external environment; reading a detection signal variable according to the collision with respect to the transmission signal from the collision detection unit; determining that the collision has occurred when the detection signal is smaller than a threshold value; and changing to travel accordingly when the collision occurs.

The collision detection unit comprises a plurality of variable capacitance collision sensors spaced apart along the side of the main body.

Each of the variable capacitance collision sensors comprises; a transmitting electrode receiving a transmission signal, a counter electrode facing the transmitting electrode, a receiving electrode facing the counter electrode and outputting a detection signal, and a dielectric layer formed between the transmitting electrode, the counter electrode, and the receiving electrode.

The transmitting electrode and the receiving electrode are formed on a same printed circuit board to transmit the transmission signal and the detection signal.

The counter electrode faces the transmitting electrode and the receiving electrode simultaneously with the dielectric layer interposed therebetween, and a distance between the counter electrode and the transmitting electrode and the receiving electrode is variable due to the collision so that capacitance is variable.

The determining the detection signal is characterized in that; when the detection signal is smaller than the threshold value, it is determined that there is the collision in the receiving electrode from which the detection signal is obtained, and the threshold value is the average value of the detection signal of the previous cycle.

**Advantageous Effects of Invention**

Through the above solution, obstacle detection of the robot cleaner can be implemented using a low-cost collision sensor.

In addition, by providing a bumper structure to the collision detection unit of the robot cleaner, it is possible to minimize the impact of collision on the interior of the body.

By detecting the electrostatic capacity of the collision sensor on the collision detection unit of the robot cleaner, the two membranes for collision detection do not directly contact each other, thereby minimizing detection performance degradation due to collision accumulation. In addition, by detecting the capacitance of the collision sensor, it is possible to determine the collision location and the collision strength.

Finally, it is possible to reduce costs by grouping a plurality of collision sensors of the collision detection unit of the robot cleaner and selectively detecting a specific group at a specific time.

**Brief Description of Drawings**

    FIG. 1 is a perspective view illustrating a robot cleaner 100 and a charging stand 200 for charging a robot cleaner according to an embodiment of the present disclosure.
    FIG. 2 is an elevation view of the robot cleaner 100 of FIG. 1 when viewed from above.
    FIG. 3 is an elevation view of the robot cleaner 100 of FIG. 1 when viewed from the front.
    FIG. 4 is an elevation view of the robot cleaner 100 of FIG. 1 when viewed from below.
    FIG. 5 is a block diagram illustrating a control relationship between main components of the robot cleaner 100 of FIG. 1.
    FIG. 6 is an exploded view showing a part of the interior of the robot cleaner according to the present invention.
    FIG. 7 is a detailed view showing a collision detection unit according to the present invention.

    FIG. 8 is a changed detailed view of a collision detection unit according to an embodiment of the present disclosure.
    FIGS. 9A and 9B are diagrams showing electric field changes with respect to FIGS. 7 and 8.
    FIG. 10 is a flowchart illustrating a control method of a robot cleaner according to an embodiment of the present disclosure.
    FIG. 11 is a diagram illustrating a collision detection unit according to another embodiment of the present disclosure.

**Mode for the Invention**

In linguistic and mathematical comparisons throughout this description, 'less than or equal to' and 'less than' can be easily substituted with each other from a point of view of a person skilled in the art, 'greater than or equal to' and 'greater than' can be easily substituted with each other from a point of view of a person skilled in the art, and it is obvious that the substitution does not cause any problem in implementing the present disclosure.

A moving robot 100 of the present disclosure means a robot that can move itself by using a wheel or the like, and may be a home helper robot or a robot cleaner.

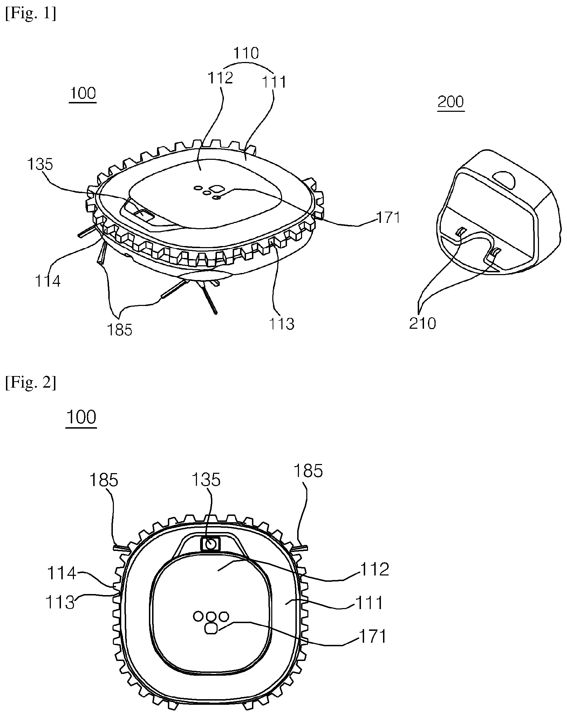

Hereinafter, referring to FIGS. 1 to 5, the robot cleaner 100 of the moving robot is described by way of an example, but is not limited thereto.

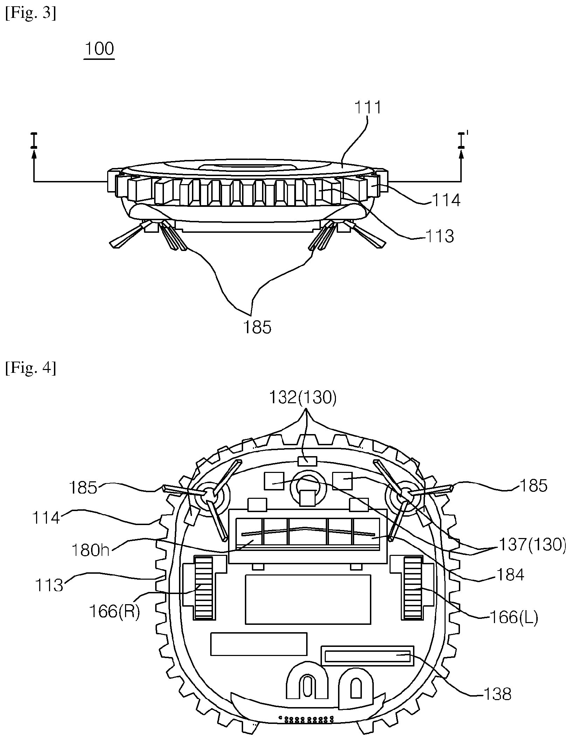

The robot cleaner 100 includes a main body 110. Hereinafter, in defining each portion of the main body 110, a portion facing the ceiling in the traveling area is defined as an upper surface portion (see FIG. 2), a portion facing the floor in the traveling area is defined as a bottom surface portion (see FIG. 4), and a portion facing the traveling direction, among the portions forming the circumference of the main body 110 between the upper surface portion and the bottom surface portion, is defined as a front surface portion (see FIG. 3). In addition, a portion facing in the opposite direction to the front surface part of the main body 110 may be defined as a rear surface portion. The main body 110 may include a case 111 forming a space in which various components of the robot cleaner 100 are accommodated.

A buffer portion 113 is formed surrounding the front portion forming the circumference of the main body 110. The buffer portion 113 surrounds the entire main body 110 and is formed as a whole except for an area in contact with the charging station 200.

The buffer portion 113 may be attached to the main body 110 in a molding form with a predetermined elastic force, and the buffer portion 113 may have a plurality of protrusions 114 having the same shape and protruding to a predetermined height. The plurality of protrusions 114 may be implemented in various shapes but may be implemented in a shape such as a square pillar as shown in FIGS. 1 to 4.

Further, the plurality of protrusions 114 are spaced apart by a predetermined distance from the adjacent protrusions 114, and the predetermined distances apart may be uniformly set.

The robot cleaner 100 includes a sensing unit 130 that detects a surrounding situation. The sensing unit 130 may detect information on the outside the robot cleaner 100. The sensing unit 130 detects a user around the robot cleaner 100. The sensing unit 130 may detect an object around the robot cleaner 100.

The sensing unit 130 may detect information on the cleaning zone. The sensing unit 130 may detect obstacle such as wall, furniture, and a cliff on the traveling surface. The sensing unit 130 may detect information on the ceiling. The sensing unit 130 may detect an object placed on the traveling surface and/or an external upper object. The external upper object may include a ceiling disposed in an upper direction of the robot cleaner 100 or a lower surface of furniture. Through the information detected by the sensing unit 130, the robot cleaner 100 may map a cleaning zone.

The sensing unit 130 may detect information related to a user around the robot cleaner 100. The sensing unit 130 may detect position information of the user. The position information may include direction information on the robot cleaner 100. The position information may include distance information between the robot cleaner 100 and the user. The sensing unit 130 may detect a direction of the user with respect to the robot cleaner 100. The sensing unit 130 may detect a distance between the user and the robot cleaner 100.

The position information may be directly acquired by detection of the sensing unit 130 or may be processed by a controller 140 and then be acquired.

The sensing unit 130 may include an image detecting unit 135 that detects an image of a surrounding. The image detecting unit 135 may detect an image in a specific direction with respect to the robot cleaner 100. For example, the image detecting unit 135 may detect an image in front of the robot cleaner 100. The image detecting unit 135 photographs a traveling area and may include a digital camera. The digital camera may include at least one optical lens, an image sensor (e.g. a CMOS image sensor) configured to include a plurality of photodiodes (e.g. pixel) forming an image by the light passed through the optical lens, and a digital signal processor (DSP) for constituting an image based on a signal output from the photodiode. The digital signal processor may generate not only a still image but also a moving image formed of frames composed of the still image.

The sensing unit 130 includes a collision detection unit 120 that detects surrounding walls or obstacles. Through the collision detection unit 120, the configuration of the wall around the robot cleaner 100 and the presence of an obstacle may be detected. The collision detection unit 120 may detect the direction of a wall or an obstacle, and for this purpose, it may include a variable capacity collision sensor A having a variable capacity according to a collision corresponding to the buffer portion 113 formed on the front portion of the main body 110. In addition, the collision detection unit 120 may additionally include a camera, an ultrasonic sensor, or an infrared (IR) sensor. The collision detection unit 120 will be described in detail later.

The sensing unit 130 may include a cliff sensing unit 132 that detects the presence of a cliff on the floor in the driving area. A plurality of cliff detection units 132 may be provided.

The sensing unit 130 may further include a lower image sensor 137 for acquiring an image of the floor. The sensing unit 130 may further include an immersion detection unit (not shown) that detects whether immersion has been performed inside the robot cleaner 100.

The robot cleaner 100 includes a traveling unit 160 to move the main body 110. The traveling unit 160 moves the main body 110 with respect to the floor. The traveling unit 160 may include at least one drive wheel 166 to move the main body 110. The traveling unit 160 may include a drive motor. The drive wheel 166 may be provided in the left and right sides of the main body 110 respectively, and hereinafter, are referred to as a left wheel 166(L) and a right wheel 166(R).

The left wheel 166(L) and the right wheel 166(R) may be driven by a single drive motor, but if necessary, a left wheel drive motor which drives the left wheel 166(L) and a right wheel drive motor which drives the right wheel 166(R) may be provided respectively. By making a difference between the rotational speeds of the left wheel 166(L) and the right wheel 166(R), the traveling direction of the main body 110 can be switched to the left or the right.

The robot cleaner 100 includes a cleaning unit 180 which performs a cleaning function.

The robot cleaner 100 may move the cleaning zone and clean the floor by the cleaning unit 180. The cleaning unit 180 may include a suction unit for suctioning foreign matter, a brush 184, 185 for brushing foreign matter, a dust container (not shown) for storing the foreign matter collected by the suction unit or the brush, and/or a mop unit (not shown) for mopping, and the like.

A suction port 180h through which air is sucked may be formed in the bottom surface portion of the main body 110. In the main body 110, a suction unit (not shown) that provides suction power so that air can be sucked through the suction port 180h, and a dust container (not shown) that collects dust sucked with air through the suction port 180h may be provided.

An opening for inserting and detaching the dust container may be formed in the case 111, and a dust container cover 112 for opening and closing the opening may be rotatably provided with respect to the case 111.

A roll-shaped main brush 184 having brushes exposed through the suction port 180h, and an auxiliary brush 185 which is positioned in the front side of the bottom surface portion of the main body 110, and has a brush formed of a plurality of radially extended feathers may be provided. The rotation of these brushes 184 and 185 removes dust from the floor in the travel zone, and the dust separated from the floor is sucked through the suction port 180h and collected in the dust container.

The battery 138 may supply power not only necessary for the drive motor but also necessary for the overall operation of the robot cleaner 100. When the battery 138 is discharged, the robot cleaner 100 may travel to return to the charging stand 200 so as to perform charging, and during this return traveling, the robot cleaner 100 may detect the position of the charging stand 200.

The charging stand 200 may include a signal transmitter (not shown) for transmitting a certain return signal. The return signal may be an ultrasonic signal or an infrared signal but is not necessarily limited thereto.

Meanwhile, the image detecting unit 135 is provided in the upper surface portion of the main body 110 to acquire an image of the ceiling in the cleaning zone, but the position and the photographing range of the image detecting unit 135 is not necessarily limited thereto. For example, the image detecting unit 135 may be provided to acquire an image of the front of the main body 110.

In addition, the robot cleaner 100 may further include an operation unit (not shown) that may input On/Off or various commands.

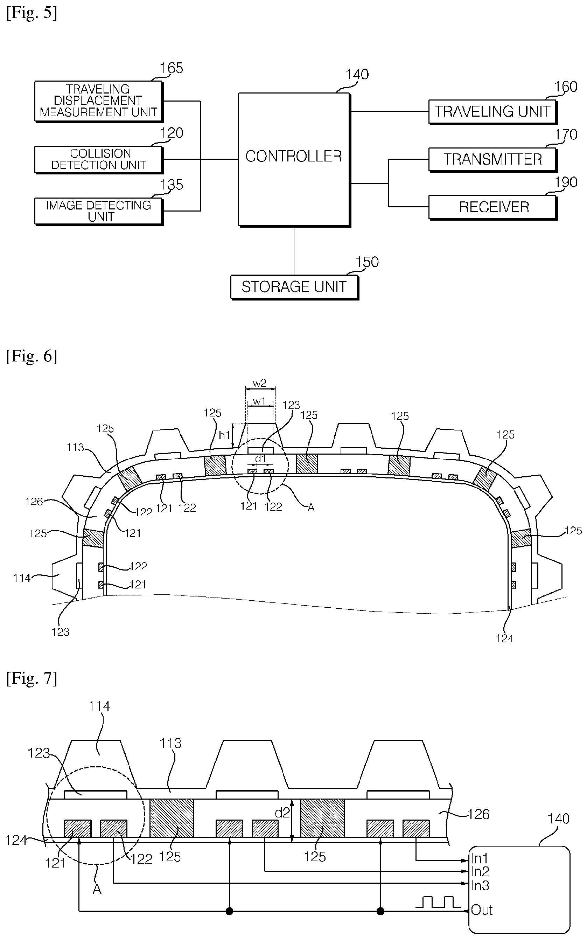

Referring to FIG. 5, the robot cleaner 100 includes a storage unit 150 that stores various data. Various data necessary for the control of the robot cleaner 100 may be recorded in the storage unit 150. The storage unit 150 may include a volatile or nonvolatile recording medium. The recording medium stores data that can be read by a microprocessor, and includes a hard disk drive (HDD), a solid state disk (SSD), a silicon disk drive (ROM), a ROM, a RAM, a CD-ROM, a Magnetic tape, a floppy disk, an optical data storage device, and the like.

The storage unit 150 may store a map of the cleaning zone. The map may be input by an external terminal that may exchange information with the robot cleaner 100 through wired or wireless communication or may be generated by the robot cleaner 100 by learning by itself. In the former case, examples of the external terminal may include a remote controller, a PDA, a laptop, a smartphone, a tablet, and the like, which are equipped with an application for setting a map.

A traveling displacement measuring unit 165 may measure a traveling displacement based on the image acquired by the image detecting unit 135. The traveling displacement conceptually includes a moving direction and a moving distance of the robot cleaner 100. For example, the traveling displacement measuring unit 165 may measure the traveling displacement through a continuous pixel comparison of the floor image which varies according to the continuous movement of the robot cleaner 100.

In addition, the traveling displacement measuring unit 165 may measure the traveling displacement of the robot cleaner 100 based on the operation of the traveling unit 160. For example, the controller 140 may measure the current or past moving speed of the robot cleaner 100, the distance traveled, and the like based on the rotation speed of the traveling wheel 136, and may also measure the current or past direction change process according to the rotation direction of each traveling wheel 136(L), 136(R).

The traveling displacement measuring unit 165 may measure the traveling displacement using at least one of the collision detection unit 120 and the image detecting unit 135.

The controller 140 may recognize the position of the robot cleaner 100 on the map, based on the measured traveling displacement.

A transmitter 170 may transmit information of the robot cleaner 100 to other robot cleaner or a central server. A receiver 190 may receive information from other robot cleaner or a central server. The information transmitted by the transmitter 170 or the information received by the receiver 190 may include configuration information of the robot cleaner.

The controller 140 may process and determine various information. The controller 140 may perform information processing for learning the cleaning zone. The controller 140 may perform information processing for recognizing the current position on the map. The controller 140 may control the overall operation of the robot cleaner 100 through a control of various configurations constituting the robot cleaner 100 (e.g. the traveling displacement measuring unit 165, the collision detection unit 120, the image detecting unit 135, the traveling unit 160, the transmitter 170, the receiver 190, etc.).

The control method according to the present embodiment may be performed by the controller 140. The present disclosure may be a control method of the robot cleaner 100, or may be a robot cleaner 100 including a controller 140 performing the control method. The present disclosure may be a computer program including each step of the control method, or may be a recording medium on which a program for implementing the control method in a computer is recorded. The term 'recording medium' means a computer-readable recording medium. The present disclosure may be a moving robot control system including both hardware and software.

The controller 140 of the robot cleaner 100 processes and determines various types of information such as mapping and/or recognizing a current position. The controller 140 may be configured to map the cleaning zone through the image and the learning and to be able to recognize the current position on the map. That is, the controller 140 may perform a simultaneous localization and mapping (SLAM) function.

The controller 140 may control the driving of the traveling unit 160. The controller 140 may control the operation of the cleaning unit 180.

The actual cleaning zone may correspond to the cleaning zone on the map. The cleaning zone may be defined as the sum of a zone on all planes where the robot cleaner 100 has ever traveled and a zone on a plane where the robot cleaner 100 is currently traveling.

The controller 140 may determine a moving path of the robot cleaner 100 based on the operation of the traveling unit 160. For example, the controller 140 may determine the current or past moving speed of the robot cleaner 100, the distance traveled, and the like based on the rotational speed of the drive wheel 166, and may also determine the current or past direction change process according to the rotation direction of each drive wheel 166(L), 166(R). Based on the determined traveling information of the robot cleaner 100, the position of the robot cleaner 100 on the map may be updated. In addition, the position of the robot cleaner 100 on the map may be updated by using the image information.

Specifically, the controller 140 controls the traveling of the robot cleaner 100, and controls the driving of the traveling unit 160 according to a set traveling mode. As the traveling mode of the traveling unit 160, a zigzag mode, an edge mode, a spiral mode, or a hybrid mode may be selectively set.

The zigzag mode is defined as a mode of traveling in a zigzag manner and performing cleaning while being spaced apart from a wall or an obstacle by a certain distance or more. The edge mode is defined as a mode of performing cleaning while traveling in a zigzag manner close by the wall. The spiral mode is defined as a mode of cleaning spirally within a certain area based on one place in waiting.

Meanwhile, the controller 140 generates a map of the cleaning area. That is, the controller 140 may form a map of the cleaning area through the location recognized through the preceding cleaning and the image acquired at each point. The controller 140 matches the image acquired at each point with each node on the map. The acquired images may correspond one-to-one to the nodes.

The controller 140 may recognize the current location by using at least one of the collision detection unit 120 and the image detection unit 135, and may recognize the current location on the map.

The input unit 171 may receive On / Off or various commands. The input unit 171 may include a button, a key, or a touch-type display. The input unit 171 may include a microphone for speech recognition.

The output unit 173 may inform the user of various information. The output unit 173 may include a speaker and / or a display.

Meanwhile, the controller 140 reads the detection signal from the collision detection unit 120 to determine whether there is an obstacle around the robot cleaner 100, and controls the operation according to the determination result. The collision detection unit 120 includes a plurality of variable capacity collision sensors A disposed between the buffer portion 113 of the robot cleaner 100 and the side surface of the main body 110.

As described above, the controller 140 detects from the collision sensor A by providing a variable capacity collision sensor A having a variable capacity according to a direct collision between the buffer formed on the side surface of the main body 110 and an obstacle. By reading the signal, it is possible to extract information about the obstacle by analyzing the collision strength and the direction of the collision.

Hereinafter, a control operation of the collision detection unit 120 and the robot cleaner 100 using the same of the present disclosure will be described with reference to FIGS. 6 to 10.

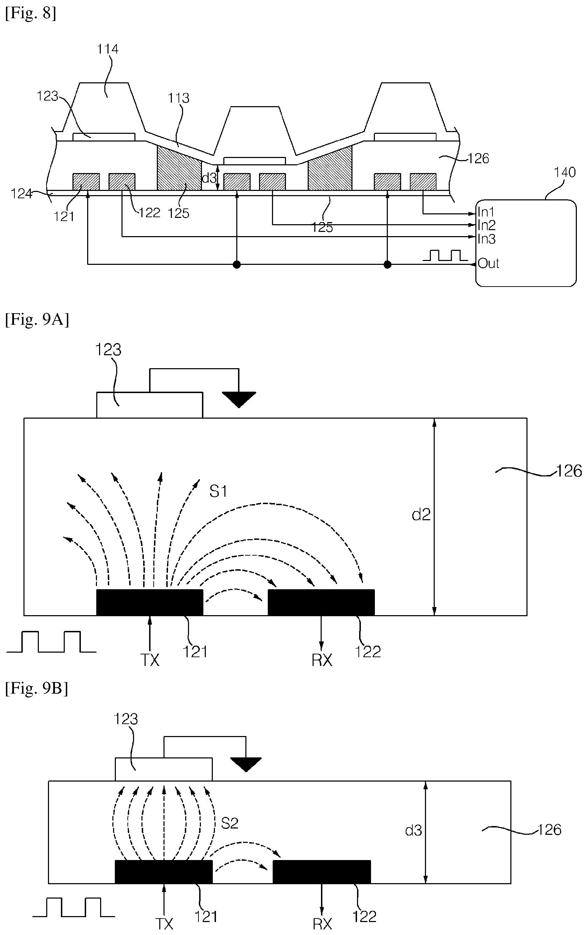

FIG. 6 is an exploded view showing a part of the interior of the robot cleaner according to an embodiment of the present disclosure, FIG. 7 is a detailed view showing the collision detection unit according to an embodiment of the present disclosure, FIG. 8 is a variable detailed view of the collision detection unit 120 according to an embodiment of the present disclosure, and FIGS. 9A and 9B are diagrams showing electric field changes with respect to FIGS. 7 and 8.

Referring to FIGS. 6 and 7, the robot cleaner 100 according to the present invention includes a plurality of collision sensors A disposed between the buffer portion 113 and the outer surface of the body 110 on the side of the case constituting the body 110. The plurality of collision sensors A comprises a capacitor including a dielectric layer 126 between the transmitting electrode 121, the receiving electrode 122, the ground electrode 123 and the transmitting electrode 121, the receiving electrode 122 and the ground electrode 123.

Specifically, the printed circuit board 124 may be formed outside the side surface of the case 111 of the main body 110, and the plurality of transmitting electrodes 121 and the plurality of receiving electrodes 122 toward the outside may be formed on the printed circuit board 124. The printed circuit board 124 may be a flexible circuit board to be bent and disposed along the outer surface of the case 111 of the main body 110.

The transmitting electrode 121 and the receiving electrode 122 may be patterned on the printed circuit board 124, and the transmitting electrode 121 and the receiving electrode 122 constituting one collision sensor A may is formed to be spaced apart by a first distance $d1$.

The transmitting electrode 121 receives a transmission signal by a pattern formed on the printed circuit board 124. The receiving electrode 122 transmits a signal set to the receiving electrode 122 by a pattern formed on the printed circuit board 124 to the controller 140.

The transmitting electrode 121 and the receiving electrode 122 may be formed of a conductive material, and may be formed of an alloy containing copper, but are not limited thereto.

Meanwhile, the ground electrode 123 is formed on the buffer portion 113 so as to face the transmitting electrode 121 and the receiving electrode 122. The ground electrode 123 may have a larger width $w1$ than the transmitting electrode 121 and the receiving electrode 122 so as to simultaneously face the transmitting electrode 121 and the receiving electrode 122 as shown in FIG. 6.

The ground electrode 123 may be grounded. Alternatively, a fixed voltage may be applied.

The ground electrode 123 may be formed integrally with a material constituting the buffer portion 113, and may be formed corresponding to the protrusion 114 of the buffer portion 113.

At this time, when the cross section of the projection 114 of the buffer portion 113 has the shape of a rectangle in which the width decreases as it goes toward the end, the ground electrode 123 may be formed to have a width w1 smaller than the shortest width w2.

In addition, when the protrusion 114 of the buffer portion 113 protrudes to have the first height h1, the height of the ground electrode 123 is formed to have a height similar to the depression region not forming the protrusion 114.

Although the drawings show that each collision sensor A is formed to correspond to each protrusion 114, unlike this, the collision sensor A may be formed with a smaller number than the protrusion 114. That is, the protrusion 114 in which the collision sensor A is formed and the protrusion 114 in which the collision sensor A is not formed may be arranged to be alternately formed, but the number is not limited thereto.

Meanwhile, a dielectric layer 126 having a thickness corresponding to a second distance d2 is included between the ground electrode 123 and the transmitting electrode 121 and the receiving electrode 122 to have the second distance d2.

The dielectric layer 126 may be formed of a dielectric material having a specific dielectric constant and may be filled with air.

Further, a plurality of elastic portion 125 are formed in the dielectric layer 126.

Each elastic portion 125 may be formed on the dielectric layer 126 between the two collision sensors A, supports between the buffer portion 113 and the printed circuit board 124, and may be formed of an elastic material whose height varies depending on the impact strength when the buffer portion 113 is pressed according to the impact.

For example, the elastic portion 125 may be a leaf spring, but is not limited thereto.

The elastic portion 125 prevents direct contact between the opposite electrodes 121, 122, and 123 to implement a sensor capable of changing the detection signal according to a change in capacitance.

The elastic portion 125 is formed corresponding to the recessed region between the protrusion 114 and the protrusion 114 of the buffer portion 113.

The collision sensor A has a state as shown in FIG. 9A when a normal state is maintained without collision.

That is, one capacitor is formed as the dielectric layer 126 between the ground electrode 123 and the transmitting electrode 121 as a dielectric, and when the second distance d2, which is the width of the dielectric layer 126, is not variable, another capacitor is formed by using the dielectric layer 126 as the dielectric between the ground electrode 123 and the receiving electrode 122 by the capacitance set according to the second distance d2.

Therefore, a specific voltage is set to the receiving electrode 122 by the capacitance of the ground electrode 123 and the dielectric layer 126.

That is, the change in capacitance of the dielectric layer 126 according to the distance d2 between the two electrodes is as follows.

$$[\text{Equation 1}]$$
$$C = Q / V = \varepsilon A / t$$

In this case, C is defined as the capacitance of the dielectric layer 126, Q is the amount of charge, V is the voltage between the electrodes, $\varepsilon$ is the dielectric constant, A is the electrode area, and t is the distance between the electrodes.

Meanwhile, when the collision occurs due to the obstacle from the outside, the protrusion 114 of the buffer portion 113 is pressed toward the center of the main body 110 from the protrusion 114 of the buffer portion 113 in the region where the collision occurred, and is changed to the shape shown in FIG. 8.

That is, the protrusion 114 of the buffer portion 113 in which the collision has occurred moves toward the center of the cleaner 100, and this is achieved by being pressed by the elastic force of the elastic portion 125.

However, the degree of compression of the elastic portion 125 is set according to the strength of the collision, but the two electrodes 121, 122, or 123 are not directly pressed by the compression limit of the elastic portion 125.

That is, even when pressed at the maximum strength, it is formed to be spaced apart while maintaining a predetermined distance d3.

When the collision occurs as shown in FIG. 8, the capacitance C of the dielectric layer 126 has the change as in FIG. 9B.

That is, since the distance t between the metal electrodes 121, 122, and 123 in Equation 1 decreases, the capacitance C of the dielectric layer 126 increases.

When the capacitance C of the dielectric layer 126 increases as described above, when the applied transmission signal is the same as before, that is, if the voltage to the applied transmitting electrode 121 is the same, the voltage set on the receiving electrode 122 becomes small as the capacitance C of the dielectric layer 126 increases.

As described above, when the thickness of the dielectric layer 126 decreases due to collision, the capacitance C increases, and accordingly, the voltage of the receiving electrode 122 decreases, so that the controller 140 may read that the collision has occurred at the position corresponding to the protrusion 114 as the voltage of the receiving electrode 122 decreases.

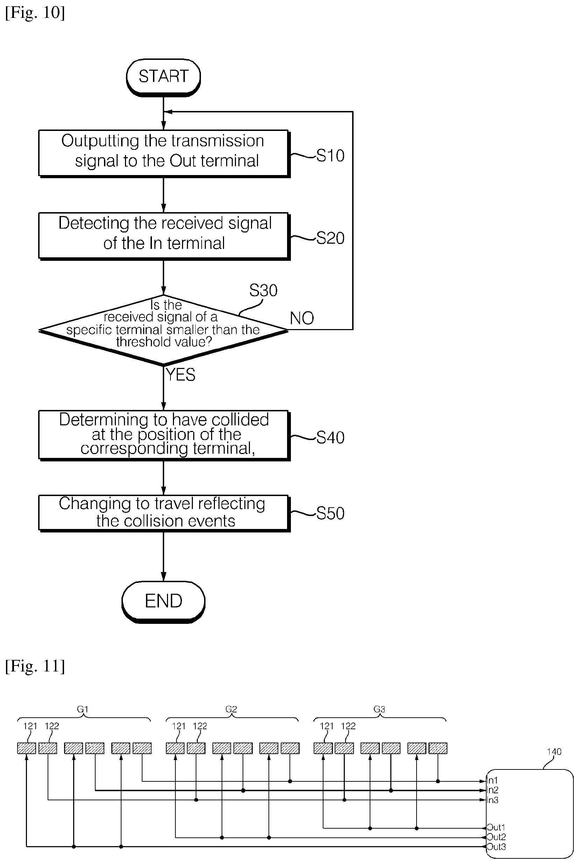

Hereinafter, a control method of the robot cleaner 100 of the present disclosure will be described with reference to FIG. 10.

The control method may be performed by the controller 140. Each step of the flowchart of the control method and a combination of the steps may be performed by computer program instructions. The instructions may be mounted in a general purpose computer or special purpose computer, etc., such that the instructions create means for performing the functions described in the flowchart step(s).

In addition, it is also possible in some embodiments that the functions mentioned in the steps occur out of order. For example, two steps shown in succession may actually be performed substantially simultaneously or the steps may sometimes be performed in the reverse order, according to a corresponding function.

When the operation of the robot cleaner 100 starts, a map may be formed through preceding cleaning. That is, when the preceding cleaning is completed, the controller 140 records the time taken and the cleaning area where the preceding cleaning has progressed. If there is a previous map applied to the preceding cleaning for the corresponding cleaning area among the maps recorded in the storage unit 150, accuracy may be improved by overlapping the currently created map with the previous map for the cleaning area and correcting an error portion.

When the mapping to the cleaning area is completed in this way, the controller 140 sets a cleaning method of the cleaning area according to the mapping result, and performs cleaning of the cleaning area according to the cleaning method. When the cleaning of the cleaning area is completed, the cleaning result for the corresponding cleaning area is recorded in the storage unit 150 so that it can be referred to in the next cleaning process.

As described above, the control method of the robot cleaner 100 according to an embodiment of the present disclosure, proceeds with mapping of the cleaning area through preceding cleaning, matching a suitable cleaning method according to the shape of the cleaning area, and calculating its efficiency to apply the optimal cleaning method to the cleaning area.

At this time, referring to FIG. 10, while the robot cleaner 100 is driving, the controller 140 outputs a transmission signal of a predetermined frequency to the Out terminal of the chip 141 on which the controller 140 is formed in order to determine whether there is a collision. At this time, as illustrated in FIG. 7, it is possible to simultaneously transmit transmission signals of the same frequency to the plurality of collision sensors A (S10).

In addition, the controller 140 periodically reads the detection signal to the In terminal of the chip 141 on which the controller 140 is formed (S20).

At this time, the chip 141 on which the controller 140 is formed may include respective In terminals corresponding to the receiving electrodes 122 of each collision sensor A, and accordingly, the detection signal of each collision sensor A is received individually and the corresponding signal is read.

At this time, it is determined whether the detection signal of the In terminal read from each receiving electrode 122 is smaller than a threshold (S30).

The threshold value may be the detection signal when a collision has not occurred, which may be an average value of detection signals of a plurality of previous periods.

When the detection signal of the In terminal from the specific receiving electrode 122 is smaller than the threshold, the controller 140 determines that a collision has occurred at the position of the receiving electrode 122 (S40).

At this time, the detection signals of the surrounding receiving electrodes 122 may be read together to evaluate the strength of the collision and the direction of the collision according to the change in the size of the detection signal.

For example, when it is determined that five detection signals having a value smaller than the threshold value are determined, the size of the five detection signals can be analyzed to determine in which direction the collision is made and with what strength.

When both the strength and the direction of the collision are analyzed, the controller 140 may change the direction of the travelling unit 160 in the direction of avoiding the obstacle and travel (S50).

As described above, the robot cleaner 100 does not include a separate infrared sensor or the like, and includes a simple electrostatic capacity variable collision sensor, so that obstacle avoidance driving can be performed at low cost.

Meanwhile, the collision detection unit 120 may be implemented and controlled according to another embodiment of the present disclosure.

FIG. 11 is a block diagram showing a collision detection unit 120 according to another embodiment of the present disclosure.

Referring to FIG. 11, the collision detection unit 120 according to another embodiment of the present disclosure is grouped into a plurality of groups G1, G2, G3<sup>쩐</sup> having a plurality of collision sensors.

That is, one group G1, G2, G3 ... may be grouped to include n collision sensors A.

The controller 140 includes an out terminal that provides the transmission signal according to the number of grouped groups G1, G2, G3....

That is, the n transmitting electrodes 121 included in the first group G1 are transmitted to the same first transmission signal through the Out1 terminal, and the n transmitting electrodes 121 included in the second group G1, G2 are transmitted to the same second transmission signal through the Out2 terminal.

At this time, the frequency and voltage values of the first transmission signal and the second transmission signal may have different values.

As described above, it is possible to know which group of signals G1, G2, G3... is transmitted according to the value of the transmitted transmission signal.

Preferably, the same pulse signal, such as a scan signal, can be sequentially applied to each group G1, G2, G3 ... as a transmission signal.

Meanwhiles, the controller 140 includes an In 1 terminal connected to the first receiving electrode 122 of each group G1, G2, G3 ... simultaneously, and is capable of reading the detection signals of the plurality of first receiving electrodes 122.

The controller 140 includes an In2 terminal that is simultaneously connected to the second receiving electrode 122 of each group G1, G2, G3 ..., and is capable of reading the detection signals of the plurality of second receiving electrodes 122.

Therefore, the controller 140 includes n IN terminals.

In this way, when the plurality of collision sensors A are grouped by n, the number of the In terminal and the Out terminal of the chip forming the controller 140 can be significantly reduced.

That is, when the transmission signal is sequentially transmitted to each group G1, G2, G3 ... so that the Out terminal has a predetermined delay value, the detection signal received at each In terminal is implemented only with the detection signals of the collision sensors A in the first group G1, G2, G3 .... That is, By reading the detection signals for each group G1, G2, G3쪈 sequentially, the number of terminals of the chip implementing the controller 140 can be significantly reduced, and the same operation can be performed.

In the case of controlling in a time division manner as described above, since transmission signals are sequentially transmitted to each group G1, G2, G3..., and detection signals are read. When the collision occurs, it is possible to accurately know that the collision occurred in a specific group G1, G2, G3 ..., thereby improving detection reliability.

100: robot cleaner 130: sensing unit
140: controller 150: storage unit
160: travelling unit 135: image sensing unit
120: collision detection unit 180: cleaning unit
200: charging stand

**Claims**

1. A robot cleaner comprising:

   a traveling unit (160) configured to move a main body (110);
   a cleaning unit (180) configured to perform a cleaning function;
   a collision detection unit (120) configured to detect collision due to variable capacitance due to the collision with an external environment; and
   a controller (140) configured to determine whether the collision occurs according to a detection signal from the collision detection unit (120) and control the traveling unit (160); **characterized in that**:
   the collision detection unit (120) is disposed on the side of the main body (110), and the collision detection unit (120) comprises a plurality of variable capacitance collision sensors spaced apart along the side of the main body (110);
   wherein each of the variable capacitance collision sensors comprises:

      a transmitting electrode (121) receiving a transmission signal,
      a counter electrode (123) facing the transmitting electrode (121),
      a receiving electrode (122) facing the counter electrode (123) and outputting the detection signal, and
      a dielectric layer (126) formed between the transmitting electrode (121), the counter electrode (123), and the receiving electrode (122).

2. The robot cleaner of claim 1, wherein the transmitting electrode (121) and the receiving electrode (122) are formed on a same printed circuit board.

3. The robot cleaner of claim 2, wherein the counter electrode (123) faces the transmitting electrode (121) and the receiving electrode (122) simultaneously with the dielectric layer (126) interposed therebetween, and
   a distance between the counter electrode (123) and the transmitting electrode (121) and the receiving electrode (122) is variable due to the collision so that capacitance is variable.

4. The robot cleaner of claim 3, wherein a plurality of elastic portion is formed in the dielectric layer (126) between the counter electrode (123), the transmitting electrode (121), and the receiving electrode (122).

5. The robot cleaner of claim 4, further comprising:
   a buffer portion (113) surrounding the side of the main body (110) to absorb impact.

6. The robot cleaner of claim 5, wherein the buffer portion (113) comprises a plurality of protrusions spaced apart by a predetermined distance and projecting toward the front.

7. The robot cleaner of claim 6, wherein the counter electrode (123) is formed on lower portion of the protrusions of the buffer portion (113).

8. The robot cleaner of claim 7, wherein the counter electrode (123) is formed to correspond to each protrusion of the buffer portion (113).

9. The robot cleaner of claim 3, wherein the controller (140) is implemented with a chip comprising:

an output terminal for supplying the transmission signal to the plurality of the transmitting electrodes (121) simultaneously; and
a plurality of input terminals respectively connected to the respective receiving electrodes (122) and for acquiring a voltage of the connected receiving electrode (122) as the detection signal.

10. The robot cleaner of claim 3, wherein the controller (140) defines the receiving electrode (122) having the detection signal is below a threshold value and calculates collision strength and collision direction by calculating change amount of the detection signal.

11. The robot cleaner of claim 3, wherein the plurality of the variable capacity collision sensors are grouped into a plurality of groups, the transmission signals are sequentially scanned to the plurality of groups, and the detection signal is read from the receiving electrode (122) of the variable capacity collision sensor of each group.

12. A method of controlling of a robot cleaner to perform cleaning while moving a main body (110), the method comprising:

periodically transmitting a transmission signal to a collision detection unit (120) arranged on the side of the main body (110), and detecting a collision due to variable capacitance due to the collision with an external environment;
reading a detection signal variable according to the collision with respect to the transmission signal from the collision detection unit (120) having a plurality of variable capacitance collision sensors spaced apart along the side of the main body (110);
determining that the collision has occurred when the detection signal is smaller than a threshold value; and
changing to travel accordingly when the collision occurs;
wherein each of the variable capacitance collision sensors comprises:

a transmitting electrode (121) receiving a transmission signal,
a counter electrode (123) facing the transmitting electrode (121),
a receiving electrode (122) facing the counter electrode (123) and outputting a detection signal, and
a dielectric layer (126) formed between the transmitting electrode (121), the counter electrode (123), and the receiving electrode (122),
wherein the transmitting electrode (121) and the receiving electrode (122) are formed on a same printed circuit board to transmit the transmission signal and the detection signal.

**Patentansprüche**

1. Reinigungsroboter, der Folgendes umfasst:

eine Fahreinheit (160), die konfiguriert ist, einen Hauptkörper (110) zu bewegen;
eine Reinigungseinheit (180), die konfiguriert ist, eine Reinigungsfunktion durchzuführen;
eine Kollisionsdetektionseinheit (120), die konfiguriert ist, eine Kollision aufgrund variabler Kapazität aufgrund der Kollision mit einer äußeren Umgebung zu detektieren; und
eine Steuereinrichtung (140), die konfiguriert ist, entsprechend einem Detektionssignal von der Kollisionsdetektionseinheit (120) zu bestimmen, ob die Kollision auftritt, und die Fahreinheit (160) zu steuern;
**dadurch gekennzeichnet, dass**:

die Kollisionsdetektionseinheit (120) auf der Seite des Hauptkörpers (110) angeordnet ist, und die Kollisionsdetektionseinheit (120) mehrere Kollisionssensoren mit variabler Kapazität umfasst, die entlang der Seite des Hauptkörpers (110) voneinander beabstandet sind;
wobei jeder der Kollisionssensoren mit variabler Kapazität Folgendes umfasst:

eine Sendeelektrode (121), die ein Sendesignal empfängt,
eine Gegenelektrode (123), die der Sendeelektrode (121) gegenüberliegt,
eine Empfangselektrode (122), die der Gegenelektrode (123) gegenüberliegt und das Detektionssignal ausgibt, und
eine dielektrische Schicht (126), die zwischen der Sendeelektrode (121), der Gegenelektrode (123) und der Empfangselektrode (122) gebildet ist.

2. Reinigungsroboter nach Anspruch 1, wobei die Sendeelektrode (121) und die Empfangselektrode (122) auf derselben gedruckten Leiterplatte gebildet sind.

3. Reinigungsroboter nach Anspruch 2, wobei die Gegenelektrode (123) der Sendeelektrode (121) und der Empfangselektrode (122) gleichzeitig gegenüberliegt, wobei die dielektrische Schicht (126) dazwischen angeordnet ist, und
ein Abstand zwischen der Gegenelektrode (123) und der Sendeelektrode (121) und der Empfangselektrode (122) aufgrund der Kollision variabel ist, sodass die Kapazität variabel ist.

4. Reinigungsroboter nach Anspruch 3, wobei mehrere elastische Abschnitte in der dielektrischen Schicht (126) zwischen der Gegenelektrode (123), der Sendeelektrode (121) und der Empfangselektrode (122) gebildet sind.

5. Reinigungsroboter nach Anspruch 4, der ferner Folgendes umfasst:
einen Pufferabschnitt (113), der die Seite des Hauptkörpers (110) umgibt, um Stöße zu absorbieren.

6. Reinigungsroboter nach Anspruch 5, wobei der Pufferabschnitt (113) mehrere Vorsprünge umfasst, die um einen vorbestimmten Abstand voneinander beabstandet sind und zu der Vorderseite hin vorspringen.

7. Reinigungsroboter nach Anspruch 6, wobei die Gegenelektrode (123) an einem unteren Abschnitt der Vorsprünge des Pufferabschnitts (113) gebildet ist.

8. Reinigungsroboter nach Anspruch 7, wobei die Gegenelektrode (123) derart gebildet ist, dass sie jedem Vorsprung des Pufferabschnitts (113) entspricht.

9. Reinigungsroboter nach Anspruch 3, wobei die Steuereinrichtung (140) mit einem Chip implementiert ist, der Folgendes umfasst:

einen Ausgangsanschluss zum gleichzeitigen Zuführen des Sendesignals zu den mehreren Sendeelektroden (121); und
mehrere Eingangsanschlüsse, die jeweils mit den entsprechenden Empfangselektroden (122) verbunden sind, und zum Erfassen einer Spannung der verbundenen Empfangselektrode (122) als das Detektionssignal.

10. Reinigungsroboter nach Anspruch 3, wobei die Steuereinrichtung (140) die Empfangselektrode (122) definiert, deren Detektionssignal unterhalb eines Schwellenwerts liegt, und die Kollisionsstärke und Kollisionsrichtung durch Berechnen des Änderungsbetrags des Detektionssignals berechnet.

11. Reinigungsroboter nach Anspruch 3, wobei die mehreren Kollisionssensoren mit variabler Kapazität in mehrere Gruppen gruppiert sind, die Sendesignale sequentiell auf die Mehrzahl von Gruppen abgetastet werden und das Detektionssignal von der Empfangselektrode (122) des Kollisionssensors mit variabler Kapazität von jeder Gruppe gelesen wird.

12. Verfahren zum Steuern eines Reinigungsroboters zur Durchführung einer Reinigung während ein Hauptkörper (110) bewegt wird, wobei das Verfahren Folgendes umfasst:

periodisches Senden eines Sendesignals zu einer Kollisionsdetektionseinheit (120), die an der Seite des Hauptkörpers (110) angeordnet ist, und Detektieren einer Kollision aufgrund variabler Kapazität aufgrund der Kollision mit einer äußeren Umgebung;
Lesen eines Detektorsignals, das entsprechend der Kollision bezüglich des Sendesignals von der Kollisionsdetektionseinheit (120), die mehrere Kollisionssensoren mit variabler Kapazität aufweist, die entlang der Seite des Hauptkörpers (110) beabstandet sind, variabel ist;
Bestimmen, dass die Kollision aufgetreten ist, wenn das Detektionssignal kleiner ist als ein Schwellenwert; und
Ändern der Fahrt entsprechend, wenn die Kollision auftritt;
wobei jeder der Kollisionssensoren mit variabler Kapazität Folgendes umfasst:

eine Sendeelektrode (121), die ein Sendesignal empfängt,
eine Gegenelektrode (123), die der Sendeelektrode (121) gegenüberliegt,
eine Empfangselektrode (122), die der Gegenelektrode (123) gegenüberliegt und ein Detektionssignal ausgibt, und
eine dielektrische Schicht (126), die zwischen der Sendeelektrode (121), der Gegenelektrode (123) und der Empfangselektrode (122) gebildet ist,
wobei die Sendeelektrode (121) und die Empfangselektrode (122) auf derselben gedruckten Leiterplatte gebildet sind, um das Sendesignal und das Detektionssignal zu senden.

**Revendications**

1. Robot nettoyeur comportant :

   une unité de déplacement (160), configurée pour déplacer un corps principal (110) ;
   une unité de nettoyage (180) configurée pour réaliser une fonction de nettoyage ;
   une unité de détection de collision (120) configurée pour détecter une collision due à une capacité variable due à la collision avec un environnement extérieur ; et
   une commande (140) configurée pour déterminer si la collision se produit d'après un signal de détection provenant de l'unité de détection de collision (120) et commander l'unité de déplacement (160) ;

   **caractérisé en ce que** :
   l'unité de détection de collision (120) est disposée sur le côté du corps principal (110), et l'unité de détection de collision (120) comporte une pluralité de capteurs de collision à capacité variable espacés le long du côté du corps principal (110) :
   dans lequel chacun des capteurs de collision à capacité variable comporte :

   une électrode de transmission (121) recevant un signal de transmission,
   une contre-électrode (123) dirigée vers l'électrode de transmission (121),
   une électrode de réception (122) dirigée vers la contre-électrode (123) et délivrant en sortie le signal de détection, et
   une couche diélectrique (126) formée entre l'électrode de transmission (121), la contre-électrode (123) et l'électrode de réception (122).

2. Robot nettoyeur selon la revendication 1, dans lequel l'électrode de transmission (121) et l'électrode de réception (122) sont formées sur une même carte à circuit imprimé.

3. Robot nettoyeur selon la revendication 2, dans lequel la contre-électrode (123) est dirigée vers l'électrode de transmission (121) et l'électrode de réception (122) simultanément avec la couche diélectrique (126) intercalée entre celles-ci, et
   la distance entre la contre-électrode (123) et l'électrode de transmission (121) et l'électrode de réception (122) est variable en raison de la collision, de sorte que la capacité est variable.

4. Robot nettoyeur selon la revendication 3, dans lequel une pluralité de parties élastiques est formée dans la couche diélectrique (126) entre la contre-électrode (123), l'électrode de transmission (121) et l'électrode de réception (122).

5. Robot nettoyeur selon la revendication 4, comportant en outre :
   une partie de tampon (113) entourant le côté du corps principal (110) pour absorber un impact.

6. Robot nettoyeur selon la revendication 5, dans lequel la partie de tampon (113) comporte une pluralité de saillies espacées d'une distance prédéterminée et faisant saillie vers l'avant.

7. Robot de nettoyage selon la revendication 6, dans lequel la contre-électrode (123) est formée sur une partie inférieure des saillies de la partie de tampon (113).

8. Robot nettoyeur selon la revendication 7, dans lequel la contre-électrode (123) est formée de manière à correspondre à chaque saillie de la partie de tampon (113).

9. Robot nettoyeur selon la revendication 3, dans lequel la commande (140) est mise en œuvre avec une puce comportant :

   une borne de sortie pour fournir simultanément le signal de transmission à la pluralité d'électrodes de transmission (121) ; et
   une pluralité de bornes d'entrée respectivement connectées aux électrodes de réception (122) respectives et destinées à acquérir une tension de l'électrode de réception (122) connectée en tant que signal de détection.

10. Robot nettoyeur selon la revendication 3, dans lequel la commande (140) définit l'électrode de réception (122) ayant le signal de détection qui est inférieur à une valeur de seuil et calcule une intensité de collision et une direction de collision en calculant une quantité de variation du signal de détection.

11. Robot nettoyeur selon la revendication 3, dans lequel les capteurs de la pluralité de capteurs de collision à capacité variable sont regroupés en une pluralité de groupes, les signaux de transmission sont balayés séquentiellement vers la pluralité de groupes, et le signal de détection est lu à partir de l'électrode de réception (122) du capteur de collision à capacité variable de chaque groupe.

12. Procédé de commande d'un robot nettoyeur pour réaliser un nettoyage tout en déplaçant un corps principal (110), le procédé comportant les étapes consistant à :

    transmettre périodiquement un signal de transmission à une unité de détection de collision (120) agencée sur le côté du corps principal (110), et détecter une collision due à une capacité variable due à la collision avec un environnement extérieur ;

lire un signal de détection variable en fonction de la collision par rapport au signal de transmission provenant de l'unité de détection de collision (120) ayant une pluralité de capteurs de collision à capacité variable espacés le long du côté du corps principal (110) ;

déterminer que la collision s'est produite lorsque le signal de détection est inférieur à une valeur de seuil ; et

changer de manière à se déplacer en conséquence lorsque la collision se produit ;

dans lequel chacun des capteurs de collision à capacité variable comporte :

    une électrode de transmission (121) recevant un signal de transmission,
    une contre-électrode (123) dirigée vers l'électrode de transmission (121),
    une électrode de réception (122) dirigée vers la contre-électrode (123) et délivrant en sortie un signal de détection, et
    une couche diélectrique (126) formée entre l'électrode de transmission (121), la contre-électrode (123) et l'électrode de réception (122),
    dans lequel l'électrode d'émission (121) et l'électrode de réception (122) sont formées sur une même carte à circuit imprimé pour transmettre le signal d'émission et le signal de détection.

[Fig. 1]

[Fig. 2]

[Fig. 3]

100

111

114

113

185

[Fig. 4]

132(130)

185

185

114

137(130)

180h

184

113

166(L)

166(R)

138

[Fig. 5]

```
┌─────────────────────┐
│     TRAVELING       │165
│    DISPLACEMENT     │
│ MEASUREMENT UNIT    │
└─────────────────────┘
                                    140
┌─────────────────────┐    ┌──────────────┐        ┌──────────────────┐160
│     COLLISION       │120 │              │────────│  TRAVELING UNIT  │
│  DETECTION UNIT     │────│  CONTROLLER  │        └──────────────────┘
└─────────────────────┘    │              │        ┌──────────────────┐170
                           │              │────────│   TRANSMITTER    │
┌─────────────────────┐    │              │        └──────────────────┘
│  IMAGE DETECTING    │135 │              │        ┌──────────────────┐190
│       UNIT          │────│              │────────│    RECEIVER      │
└─────────────────────┘    └──────────────┘        └──────────────────┘
                                  │
                                  │              150
                           ┌──────────────┐
                           │ STORAGE UNIT │
                           └──────────────┘
```

[Fig. 6]

[Fig. 7]

17

[Fig. 8]

[Fig. 9A]

[Fig. 9B]

[Fig. 10]

```
                    ┌─────────────┐
                    │    START    │
                    └─────────────┘
                           │
                           ▼
          ┌──────────────────────────────┐
          │  Outputting the transmission  │── S10
          │    signal to the Out terminal │
          └──────────────────────────────┘
                           │
                           ▼
          ┌──────────────────────────────┐
          │  Detecting the received signal │── S20
          │       of the In terminal       │
          └──────────────────────────────┘
                           │
                           ▼    S30
                      ╱─────────╲
                 ╱   Is the        ╲
            ╱ received signal of a    ╲   NO
          ◄ specific terminal smaller than the
            ╲     threshold value?   ╱
                 ╲               ╱
                      ╲─────────╱
                           │ YES
                           ▼
          ┌──────────────────────────────┐
          │   Determining to have collided │── S40
          │     at the position of the     │
          │     corresponding terminal,    │
          └──────────────────────────────┘
                           │
                           ▼
          ┌──────────────────────────────┐
          │   Changing to travel reflecting │── S50
          │      the collision events      │
          └──────────────────────────────┘
                           │
                           ▼
                    ┌─────────────┐
                    │     END     │
                    └─────────────┘
```

[Fig. 11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100000455
- KR 1020100105097
- US 8489234 B
- WO 2019027140 A1
- KR 101130729 B1
- KR 20120011145 A